# EUROPÄISCHE PATENTSCHRIFT

(11) **EP 0 756 977 B1**
(45) Veröffentlichungstag und Bekanntmachung des Hinweises auf die Patenterteilung: **05.09.2001**
(21) Anmeldenummer: 96109689.8
(22) Anmeldetag: 17.06.1996
(51) Int. Cl.: B60T 17/00

(54) **Schalldämpfer für Luftabsperrhähne**
Silencer for air cut-off valve
Silencieux pour robinet d'arrêt d'air

(30) Priorität: 31.07.1995 DE 19528006
(43) Veröffentlichungstag der Anmeldung: 05.02.1997
(73) Patentinhaber: KNORR-BREMSE Systeme für Schienenfahrzeuge GmbH, 80809 München (DE)
(72) Erfinder: Ritter, Hans Jürgen, 10179 Berlin (DE)

(56) Entgegenhaltungen:
- EP-A- 0 132 696
- DE-A- 1 403 976
- DE-C- 511 919
- US-A- 2 065 343
- PATENT ABSTRACTS OF JAPAN vol. 010, no. 261 (M-514), 5.September 1986 & JP 61 085520 A (FUMIHIRO NAKAGAWA;OTHERS: 01), 1.Mai 1986,

## Beschreibung

Die Erfindung betrifft einen Schalldämpfer für Luftabsperrhähne in den Luftleitungen von Schienenfahrzeugen.

Die Druckluftbremsen einzelner Schienenfahrzeuge im Zugverband sind über flexible, kuppelbare Bremskupplungen miteinander verbunden. Vor jeder Bremskupplung ist ein Luftabsperrhahn angeordnet.

Dieser hat die Aufgabe, die Luftleitungen des letzten Fahrzeuges zur Außenluft hin zu verschließen.

Gleichzeitig mit dem Verschließen der Luftleitung wird die der Bremskupplung zugewandte Seite entlüftet.

Dadurch wird eine gefahrlose Entkupplung von Fahrzeugen bzw. Zugteilen möglich.

Im UIC-Kodex ist für die Entlüftung ein Querschnitt von mindestens 80 mm² vorgeschrieben. Gleichzeitig wird durch die Begrenzungslinien für die Luftabsperrhähne ein sehr kleiner Bauraum vorgegeben.

Die bei den Entlüftungsvorgängen abblasende Luft erzeugt großen Lärm und gefährdet dadurch das Rangierpersonal.

Um diesen Lärm zu mindern, werden die Entlüftungsschrauben der Luftabsperrhähne unter Einhaltung o.g. Begrenzungslinien entsprechend ausgebildet.

Bekannt sind Entlüftungsschrauben, die den Luftstrom in zwei Teile aufteilen und um 180° umlenken. Weiter sind Entlüftungsschrauben bekannt, die der Entlüftungsbohrung mehrere kleinere Bohrungen nachordnen und somit den Luftstrom z.T. mehrfach in mehrere kleinere Luftströme aufteilen.

Aus der JP-A-61-085520 ist ein Schalldämpfer geeignet für Luftabsperrhähne, insbesondere von Fahrzeugen, und geeignet, um am Luftabsperrhahn angeordnet zu werden, bekannt, wobei in einem Gehäuse, quer zu einer Entlüftungsbohrung, die in einem Umlenkraum mündet, mehrere Strömungskanäle angeordnet sind, die durch einen Dämpfring umschlossen werden.

Die damit erzielten Schallpegelsenkungen können aber nicht befriedigen.

Der Erfindung liegt die Aufgabe zugrunde, eine Lösung zu erarbeiten, die bei Einhaltung eines Mindest querschnittes von 80 mm² und Einhaltung der Begrenzungslinien nach UIC 542 eine größtmögliche Schalldämpfung sichert.

Erfindungsgemäß wird die Aufgabe durch die Anordnung eines Schalldämpfers am Luftabsperrhahn mit den im Anspruch beschriebenen Merkmalen gelöst.

Nachfolgend wird die Erfindung unter Bezug auf die Zeichnung beschrieben.

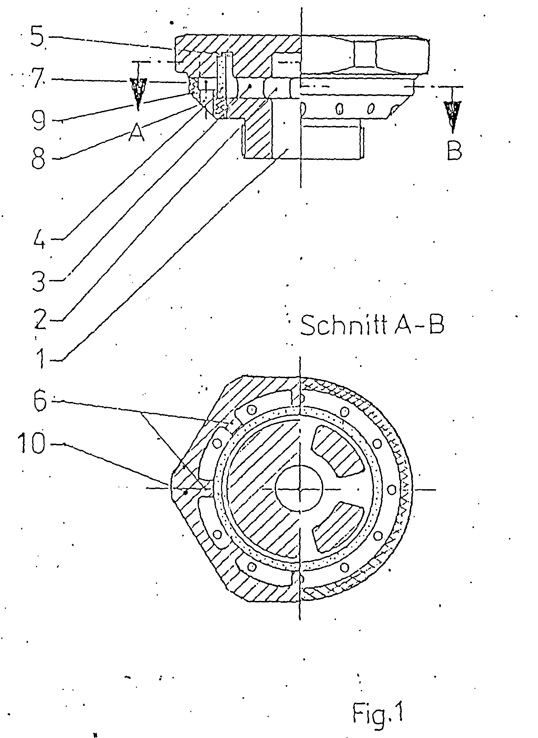

Figur 1 zeigt die Ausgestaltung des erfindungsgemäßen Schalldämpfers.

Danach wird in dem Gehäuse 10 neben der Bohrung 1 ein Umlenkraum 2 vorgesehen, um den, quer zur Bohrung 1, mehrere, vorzugsweise vier, Strömungskanäle 3 sternförmig angeordnet sind. Diese werden durch einen Dämpfring 4 umschlossen, der aus schallabsorbierendem Material, vorzugsweise gesintertem Kunststoff besteht und der in seiner Lage zu den Strömungskanälen 3 durch, im Gehäuse 10 angeordnete Führungsrippen 6 gesichert ist.

Zwischen den Führunsrippen 6 sind Ringspalte 5 vorgesehen, die in einen Ringraum 7 münden, der mit der freien Atmosphäre in Verbindung steht.

Zur Erhöhung der erzielten Absorbtion kann ein Lochring 9, vorzugsweise aus schallabsorbierendem Material, mit Bohrungen 8 am Ringraum 7 angeordnet werden.

Es ergibt sich folgende Wirkung:

Durch die Bohrung 1 des Gehäuses 10 des Schalldämpfers, angeordnet am Luftabsperrhahn, gelangt beim Entlüften Druckluft in den Umlenkraum 2, wird um 90° umgelenkt und über die Strömungskanäle 3 auf den Dämpfring 4 geleitet.

Der in den Strömungskanälen 3 erzeugte Lärm prallt auf den Dämpfring 4 und wird durch diesen größtenteils absorbiert.

Die Luft umströmt den Dämpfring 4 und gelangt über den Ringspalt 5 zwischen den Führungsrippen 6 des Gehäuses 10 in den Ringraum 7. Ein Teil der Luft gelangt durch den porösen Dämpfring 4 direkt in den Ringraum 7.

Aus dem Ringraum 7 strömt die Luft in die freie Atmosphäre, wobei eine zusätzliche Erhöhung des erzielten Effektes erfolgt, wenn als Verbindung zur Atmosphäre ein Lochring 9 mit Bohrungen 8 angeordnet wird.

### Bezugszeichenliste

- 1: Bohrung
- 2: Umlenkraum
- 3: Strömungskanäle
- 4: Dämpfring
- 5: Ringspalt
- 6: Führungsrippen
- 7: Ringraum
- 8: Bohrung
- 9: Lochring
- 10: Gehäuse

## Patentansprüche

1. Schalldämpfer für Luftabsperrhähne, insbesondere von Fahrzeugen, und geeignet, um an einem Luftabsperrhahn angeordnet zu werden, wobei in einem Gehäuse (10), quer zu einer Entlüftungsbohrung (1), die in einem Umlenkraum (2) mündet, mehrere Strömungskanäle (3) angeordnet sind, die durch einen Dämpfring (4) umschlossen werden, **dadurch gekennzeichnet**, daß im Gehäuse (10) vorzugsweise vier Strömungskanäle (3) angeordnet sind, und der Dämpfring (4) in seiner Lage zu den Strömungskanälen (3) durch Führungsrippen (6) gesichert ist, wobei zwischen den Führungsrippen (6) Ringspalten (5) vorgesehen sind, die in einen Ringraum (7) münden, der mit der Atmosphäre Verbindung hat.

2. Schalldämpfer nach Anspruch 1, **gekennzeichnet dadurch**, daß die Verbindung zur Atmosphäre durch einen Lochring (9) mit Bohrungen (8) gebildet wird.

3. Schalldämpfer nach den Ansprüchen 1 und 2, **gekennzeichnet dadurch**, daß der Dämpfring (4) und/oder der Lochring (9) aus schallabsorbierendem Material besteht.

## Claims

1. Silencer for air cut-off valves, in particular in vehicles, and suitable for being arranged on an air cut-off valve, wherein several flow channels (3), surrounded by a damping ring (4), are arranged in a housing (10), transversely to a ventilation bore (1) which opens in a deflection chamber (2), **characterised in that** preferably four flow channels (3) are disposed in the housing (10), and the damping ring (4) is secured in its position with respect to the flow channels (3) by means of guide ribs (6), annular gaps (5) being provided between the guide ribs (6), and opening into an annular chamber (7) which is in connection with the atmosphere.

2. Silencer according to claim 1, **characterised in that** the connection to the atmosphere is formed by a perforated ring (9) with bores (8).

3. Silencer according to claims 1 and 2, **characterised in that** the damping ring (4) and/or the perforated ring (9) is made of noise-absorbent material.

## Revendications

1. Amortisseur de son pour robinet d'arrêt d'air, en particulier pour véhicules automobiles, conçu pour être monté sur un robinet d'arrêt, plusieurs canaux d'écoulement (3), qui sont entourés d'un anneau d'amortissement (4), étant disposés dans un boîtier (10), transversalement à un orifice de purge (1) débouchant dans une chambre de déviation (2), **caractérisé en ce que**, dans le boîtier (10), sont disposés des canaux d'écoulement (3), de préférence au nombre de quatre, et l'anneau d'amortissement (4) est maintenu en place dans sa position par rapport aux canaux d'écoulement (3), par des nervures de guidage (6), tandis qu'entre les nervures de guidage (6) sont prévues des fentes annulaires (5) débouchant dans une chambre annulaire (7) qui communique avec l'atmosphère.

2. Amortisseur de son selon la revendications 1, **caractérisé en ce que** la communication avec l'atmosphère est réalisée à travers un disque perforé (9) ayant des trous (8)

3. Amortisseur de son selon les revendications 1 et 2, **caractérisé en ce que** l'anneau d'amortissement (4) et/ou le disque perforé (9) est constitué en un matériau absorbant le son.
